(19) Europäisches Patentamt
European Patent Office
Office européen des brevets

(11) **EP 3 290 998 B1**

(12) **EUROPEAN PATENT SPECIFICATION**

(45) Date of publication and mention
of the grant of the patent:
**15.05.2019  Bulletin 2019/20**

(51) Int Cl.:
***G02F 1/1333*** (2006.01)

(21) Application number: **17188231.9**

(22) Date of filing: **29.08.2017**

(54) **COVER WINDOW, DISPLAY DEVICE INCLUDING A COVER WINDOW, AND METHOD OF MANUFACTURING A COVER WINDOW**

ABDECKFENSTER, ANZEIGEVORRICHTUNG MIT DEM ABDECKFENSTER UND VERFAHREN ZUR HERSTELLUNG DES ABDECKFENSTERS

VITRAGE, AFFICHEUR COMPRENANT UN VITRAGE ET PROCÉDÉ DE FABRICATION D'UN VITRAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.08.2016  KR 20160110621**

(43) Date of publication of application:
**07.03.2018  Bulletin 2018/10**

(73) Proprietor: **Samsung Display Co., Ltd.**
**Gyeonggi-do 17113 (KR)**

(72) Inventors:
• **Shin, Hee-Kyun**
**Incheon 203-1004 (KR)**
• **Yeon, Eun-Kyung**
**Suwon-si, Gyeonggi-do 204-1704 (KR)**
• **Kim, Seung-Ho**
**Asan-si, Chungcheongnam-do 602-1204 (KR)**
• **Oh, Hyung-Joon**
**Seongnam-si, Gyeonggi-do 608-1002 (KR)**
• **Cho, Woo-Jin**
**Yongin-si, Gyeonggi-do 2103-1802 (KR)**

(74) Representative: **Dr. Weitzel & Partner**
**Patent- und Rechtsanwälte mbB**
**Friedenstrasse 10**
**89522 Heidenheim (DE)**

(56) References cited:
**US-A1- 2009 225 258     US-A1- 2014 170 387**
**US-A1- 2014 170 388**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

1. Field

Example embodiments relate to cover windows. More particularly, example embodiments relate to cover windows with improved strength, display devices including the cover windows, and methods of manufacturing the cover windows.

2. Description of the Related Art

In recent years, mobile phones, navigation systems, digital cameras, electronic books, and portable game machines have been provided for which display devices such as a liquid crystal display (LCD) device and an organic light emitting display (OLED) device or various mobile electronic devices such as various kinds of terminals are used.
An ordinary display device used for such a mobile electronic device may be provided with a transparent cover window so that the user can see the display portion from the front of the display panel. Since the cover window as described above has a configuration formed at the outermost part of the display device, it is desirable that the cover window is resistant to external shock so as to protect the display panel and the like inside the display device.
In addition, instead of conventional electronic devices that used switches and keyboards as input devices, recently a structure using a touch panel integrated with a display screen has been widely spread. However, compared with conventional mobile devices, since the surface of the cover window often comes into contact with fingers or the like, a cover window with stronger strength may be required. US2009/0225258 A1 discloses a cover glass having the features of the preambles of the independent claims. US2014/0170387 A1 discloses a method of manufacturing a cover glass with chamfered edges.

SUMMARY

A feature of the inventive concept is to provide a cover window with improved strength.
Another feature of the inventive concept is to provide a display device including a cover window with improved strength.
Still another feature of the inventive concept is to provide a method of manufacturing a cover window which improves the strength of the cover window.
When used herein, the term cover window especially describes a transparent cover plate, for example in form of a cover glass or a cover plate made of glass. However, the cover plate may also be made of another material, for example a synthetic or plastic material.
A cover window according to an exemplary embodiment may include a first surface, a second surface opposite the first surface, a first polishing surface extending from an end of the first surface along a first direction, the first polishing surface having a first inclination angle, and a second polishing surface extending from an end of the second surface along a second direction, the second polishing surface having a second inclination angle, which is the same as the first inclination angle. The first polishing surface and the second polishing surface may be asymmetric with respect to a center plane, the center plane passing through a center of the cover window and in parallel with the first surface.
When used herein, the term end of a surface may especially refer to the edge of the surface, i.e., the edge at which the respective surface terminates. Further, the polishing surface may also be called a polished surface. When used herein, the term inclination angle refers to the angle in a cross sectional view between the first surface and the first polishing surface (first inclination angle) respectively the second surface and the second polishing surface (second inclination angle). The cross sectional view is in a plane perpendicular to the first surface and especially also perpendicular to the second surface.
The exemplary embodiment described before may alternatively be defined as follows: The cover window or transparent cover plate may include first and second surfaces opposite to each other, facing away form each other, and especially extending in parallel to each other. The first and second surfaces may be called first main surface and second main surface, respectively. The first surface may be provided with a first chamfer around the circumference - at least around a part of the circumference or around the whole circumference. A second chamfer may be provided around a part or the whole circumference of the second surface. The chamfers may be provided by polishing the edge of the first surface respectively the second surface. In a cross sectional view perpendicular to the first surface, the first chamfer and the second chamfer are asymmetric with respect to a center line between the first surface and the second surface. Especially, in said cross sectional view, the first chamfer has a larger extension than the second chamfer. Especially, the extension of the first chamfer in a direction parallel to the first surface is larger than the extension of the second chamfer in a direction parallel with the first surface. Especially, the extension of the first chamfer in a direction perpendicular to the first surface is larger than the corresponding extension of the second chamfer. The transition of the first chamfer into the first surface may be rounded. The transition of the second chamfer into the second surface may be rounded. The transition of the first chamfer and/or the second chamfer into a front edge of the cover window, which may be called third surface or third polishing surface, may be rounded. This will also be described in the following with a definition including several surfaces forming the circumference of the cover window in said cross sectional view.

In an exemplary embodiment, a first width of the first polishing surface may be different from a second width of the second polishing surface. The width may be the extension of the respective polishing surface in a cross sectional view perpendicular through the first surface.

In an exemplary embodiment, a ratio of the first width to the second width may be in a range between about 1.5:1 and about 3:1.

In an exemplary embodiment, the first inclination angle is substantially the same as the second inclination angle.

In an exemplary embodiment, each of the first inclination angle and the second inclination angle may be greater than 90°. Especially, each of the first inclination angle and the second inclination angle may be in a range between about 120 ° and about 140 °.

In an exemplary embodiment, the cover window may further include a third polishing surface extending from an end of the first polishing surface to an end of the second polishing surface, the third polishing surface being perpendicular to the first surface.

In another exemplary embodiment, the cover window may further include an additional polishing surface disposed at at least one of: between the first surface and the first polishing surface; between the first polishing surface and the third polishing surface; between the third polishing surface and the second polishing surface; and between the second polishing surface and the second surface.

In another exemplary embodiment, the additional polishing surface may be rounded.

A cover window according to an exemplary embodiment may include a first surface, a second surface opposite the first surface, a first polishing surface extending from an end of the first surface along a first direction, the first polishing surface having a first inclination angle, and a second polishing surface extending from an end of the second surface along a second direction, the second polishing surface having a second inclination angle. A plurality of polishing patterns may be disposed on the first polishing surface and the second polishing surface, the plurality of polishing patterns extending in parallel with the first surface.

When used herein, the polishing patterns are especially in the form of grooves and/or ridges, especially in a micron range, produced in a polishing process and extending in parallel with the first surface, especially in a view on a front edge of the cover window.

In an exemplary embodiment, the cover window may further include a third polishing surface extending from an end of the first polishing surface to an end of the second polishing surface, the third polishing surface being perpendicular to the first surface. The plurality of polishing patterns may be further disposed on the third polishing surface.

In an exemplary embodiment, the plurality of polishing patterns may be disposed in at least one of protruded shapes and recessed shapes.

In an exemplary embodiment, distances between adjacent polishing patterns among the plurality of polishing patterns may be substantially the same.

In another exemplary embodiment, distances between adjacent polishing patterns among the plurality of polishing patterns may be different from each other.

In an exemplary embodiment, a blunt may be disposed on the first, second, and third polishing surfaces. When used herein, the term to dispose a blunt especially means that sharp edges in the respective surface, for example sharp edges of cracks in the surface, especially produced by the polishing process, have been rounded, for example by melting and/or etching the material, especially glass, surrounding the crack.

A display device according to an exemplary embodiment may include a display panel and a cover window disposed on the display panel. The cover window may include a first surface, a second surface opposite the first surface, a first polishing surface extending from an end of the first surface along a first direction, the first polishing surface having a first inclination angle, and a second polishing surface extending from an end of the second surface along a second direction, the second polishing surface having a second inclination angle. The first polishing surface and the second polishing surface may be asymmetric with respect to a center plane, the center plane passing through a center of the cover window and in parallel with the first surface.

In an exemplary embodiment, a first width of the first polishing surface may be different from a second width of the second polishing surface.

In an exemplary embodiment, the first inclination angle is at least substantially the same as the second inclination angle.

In an exemplary embodiment, the cover window may further include a third polishing surface extending from an end of the first polishing surface to an end of the second polishing surface, the third polishing surface being perpendicular to the first surface.

In another exemplary embodiment, the cover window may further include an additional polishing surface disposed at at least one of: between the first surface and the first polishing surface; between the first polishing surface and the third polishing surface; between the third polishing surface and the second polishing surface; and between the second polishing surface and the second surface.

In an exemplary embodiment, a plurality of polishing patterns may be disposed on the first polishing surface, the second polishing surface, and the third polishing surface, the plurality of polishing patterns extending in parallel with the first surface.

According to a method of manufacturing a cover window in accordance with an exemplary embodiment, a cover window mother substrate may be cut to form a cover window comprising a first surface, a second surface opposite the first surface, and a side surface disposed between the first surface and the second surface, the side surface being perpendicular to the first surface. The side surface of the cover window may be processed. In the processing of the side surface of the cover window, a portion (or transition) between the first surface and the side surface may be polished to form a first polishing surface, the first polishing surface extending from an end of the first surface along a first direction, the first polishing surface having a first inclination angle, and a portion (transition) between the second surface and the side surface may be polished to form a second polishing surface, the second polishing surface extending from an end of the second surface along a second direction, the second polishing surface having a second inclination angle, which is the same as the first inclination angle. The first polishing surface and the second polishing surface may be asymmetric with respect to a center plane, the center plane passing through a center of the cover window and in parallel with the first surface.

According to a method of manufacturing a cover window in accordance with an exemplary embodiment, a cover window mother substrate may be cut to form a cover window comprising a first surface, a second surface opposite the first surface, and a side surface disposed between the first surface and the second surface, the side surface being perpendicular to the first surface. The side surface of the cover window may be processed. In the processing of the side surface of the cover window, a portion (or transition) between the first surface and the side surface may be polished to form a first polishing surface, the first polishing surface extending from an end of the first surface along a first direction, the first polishing surface having a first inclination angle, and a portion (transition) between the second surface and the side surface may be polished to form a second polishing surface, the second polishing surface extending from an end of the second surface along a second direction, the second polishing surface having a second inclination angle, wherein a plurality of polishing patterns are formed on the first polishing surface and the second polishing surface, the plurality of polishing patterns extending in parallel with the first surface.

In an exemplary embodiment, a first width of the first polishing surface may be different from a second width of the second polishing surface.

In an exemplary embodiment, a ratio of the first width to the second width is in a range between about 1.5:1 and about 3:1.

In an exemplary embodiment, the first inclination angle is at least substantially the same as the second inclination angle.

In an exemplary embodiment, in the processing of the side surface of the cover window, the side surface may be polished to form a third polishing surface, the third polishing surface extending from an end of the first polishing surface to an end of the second polishing surface, the third polishing surface being perpendicular to the first surface.

In an exemplary embodiment, a plurality of polishing patterns may be formed on the first polishing surface, the second polishing surface, and the third polishing surface, the plurality of polishing patterns extending in parallel with the first surface.

In an exemplary embodiment, the first polishing surface, the second polishing surface, and the third polishing surface may be substantially simultaneously formed.

In another exemplary embodiment, an additional polishing surface may be formed at at least one of: between the first surface and the first polishing surface, between the first polishing surface and the third polishing surface, between the third polishing surface and the second polishing surface, and between the second polishing surface and the second surface after processing the side surface of the cover window.

In an exemplary embodiment, the cover window may be immersed in a glass etching/healing composition to form a blunt on the first, second, and third polishing surfaces after processing the side surface of the cover window.

In an exemplary embodiment, in the cutting a cover window mother substrate, a line may be scribed on a first surface of the cover window mother substrate.

The cover window according to an exemplary embodiment may include the asymmetric first polishing surface and second polishing surface, so that the mechanical strength of the cover window may be improved. Since the cover window according to an exemplary embodiment may include the first polishing surface and the second polishing surface which are polished in parallel with the first surface, the mechanical strength of the cover window may be improved. According to the manufacturing method of the cover window according to the exemplary embodiment, the side surface of the cover window may be asymmetrically horizontally polished to improve the mechanical strength of the cover window.

BRIEF DESCRIPTION OF THE DRAWINGS

Illustrative, non-limiting example embodiments will be more clearly understood from the following detailed description taken in conjunction with the accompanying drawings.

FIG. 1 is front and rear views illustrating a cover window according to an exemplary embodiment.
FIG. 2 is a side view illustrating a cover window according to an exemplary embodiment.
FIG. 3 is a cross-sectional view illustrating a cover window according to an exemplary embodiment.
FIG. 4 is a conceptual diagram illustrating one configuration of a cover window according to an exemplary embodiment.
FIG. 5 is a conceptual diagram illustrating one configuration of a cover window according to an exemplary embodiment.
FIG. 6 is a cross-sectional view illustrating a cover window according to another exemplary embodiment.
FIG. 7 is a view illustrating a method of manufacturing a cover window according to an exemplary embodiment.
FIG. 8 is a cross-sectional view illustrating a method of manufacturing a cover window according to an exemplary embodiment.
FIG. 9 is a side view illustrating a method of manufacturing a cover window according to an exemplary embodiment.
FIGS. 10A and 10B are diagrams for explaining a shape of a polishing pattern related to horizontal polishing.
FIG. 11 is a side view illustrating a method for manufacturing a cover window according to another exemplary embodiment.
FIG. 12 is a view illustrating a method for manufacturing a cover window according to still another exemplary embodiment.
FIGS. 13A and 13B are cross-sectional views illustrating one configuration of a cover window formed in accordance with yet another exemplary embodiment.
FIG. 14 is a cross-sectional view illustrating a display device according to an exemplary embodiment.

DETAILED DESCRIPTION OF THE EMBODIMENTS

Hereinafter, a cover window, a display device including the cover window, and a method of manufacturing the cover window in accordance with an exemplary embodiment will be explained in detail with reference to the accompanying drawings.

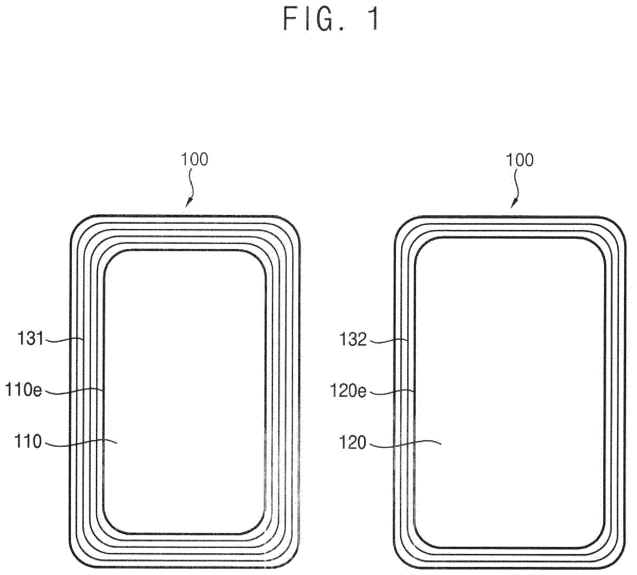

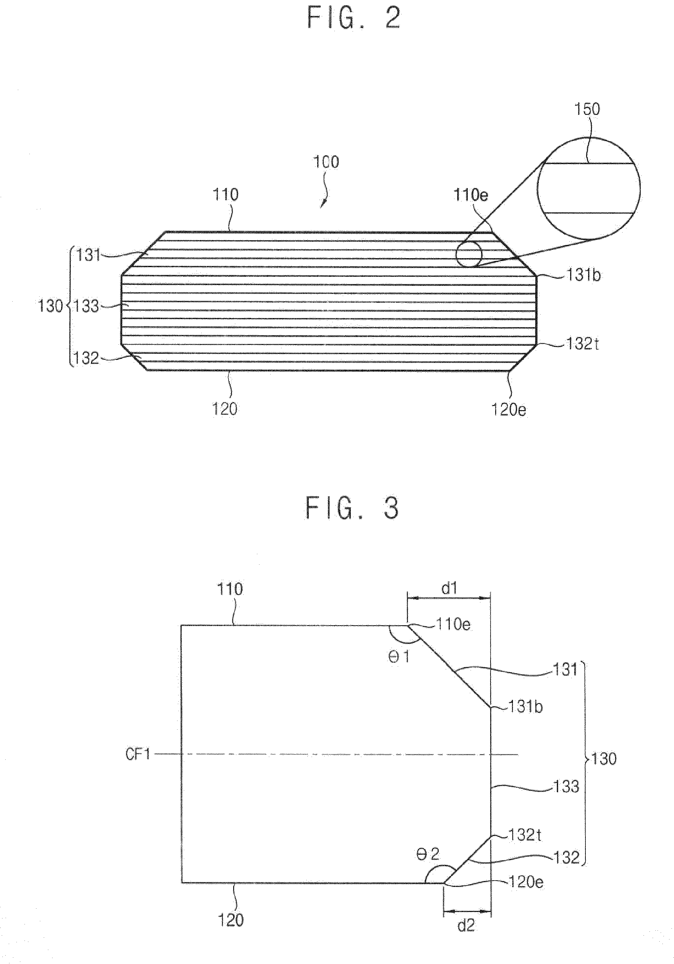

FIG. 1 is front and rear views illustrating a cover window 100 according to an exemplary embodiment. FIG. 2 is a side view illustrating the cover window 100 according to an exemplary embodiment. FIG. 3 is a cross-sectional view illustrating the cover window 100 according to an exemplary embodiment.

Referring to FIGS. 1, 2 and 3, the cover window 100 according to an exemplary embodiment may include a first surface 110, a second surface 120, a first polishing surface 131, and a second polishing surface 132. The second surface 120 may face the first surface 110, e.g., through the cover window 100. Stated another way, the second surface 120 is opposite the first surface 110 of the cover window 100 when viewed from outside the cover window 100. The first polishing surface 131 may extend from an end 110e of the first surface 110 along a first direction, and may have a first inclination angle. The second polishing surface 132 may extend from an end 120e of the second surface 120 along a second direction, and may have a second inclination angle. In another exemplary embodiment, the cover window 100 may further include a third polishing surface 133. The third polishing surface 133 may extend from an end 131b of the first polishing surface 131 to an end 132t of the second polishing surface 132, and may be substantially perpendicular to the first surface 110.

The cover window 100 may be formed of a material having heat resistance and transparency. For example, the cover window 100 may include glass, however, is not limited thereto.

The cover window 100 may include the first surface 110, the second surface 120, and a side surface 130. When the cover window 100 is disposed on a display panel, the second surface 120 may be a bottom surface that contacts the display panel, and the first surface 110 may be a top surface that is opposite to the bottom surface. The first surface 110 and the second surface 120 may be substantially in parallel with each other. For example, the first surface 110 and the second surface 120 may be substantially flat surfaces. The side surface 130 may surround the outer perimeters of the first surface 110 and the second surface 120.

The side surface 130 may include the first polishing surface 131, the second polishing surface 132, and the third polishing surface 133, although may include other surfaces in other embodiments. For example, the side surface 130 may include the first polishing surface 131 and the second polishing surface 132 without the third polishing surface 133 in between, i.e., with the first and second polishing surfaces 131, 132 directly adjacent to each other or with at least another surface than a polished or polishing surface in between. The first polishing surface 131, the second polishing surface 132, and the third polishing surface 133 may be provided by a polishing process described below.

The first polishing surface 131 may extend from the end 110e of the first surface 110 to be inclined at a predetermined angle in the first direction. For example, when the first surface 110 is a top surface, the first direction may be a downward inclined direction, and the first polishing surface 131 may be inclined with a first inclination angle θ1 relative to the first surface 110. The first polishing surface 131 may be a substantially flat surface. The first polishing surface 131 may include a top end (at end 110e) and a bottom end 131b which are substantially in parallel with each other.

The second polishing surface 132 may extend from the end 120e of the second surface 120 to be inclined at a predetermined angle in the second direction. For example, when the second surface 120 is a bottom surface, the second direction may be an upward inclined direction, and the second polishing surface 132 may be inclined with a second inclination angle θ2 relative to the second surface 120. The second polishing surface 132 may be a substantially flat surface. The second polishing surface 132 may include a top end 132t and a bottom end (at end 120e) which are substantially in parallel with each other.

The third polishing surface 133 may extend from the bottom end 131b of the first polishing surface 131 to the top end 132t of the second polishing surface 132. The third polishing surface 133 may be substantially perpendicular to the first surface 110 and the second surface 120. The third polishing surface 133 may be a substantially flat surface. The third polishing surface 133 may include a top end (at end 131b) and a bottom end (at end 132t) substantially in parallel with each other.

The end 110e of the first surface 110 may be in contact with the top end of the first polishing surface 131, and the end 120e of the second surface 120 may be in contact with the bottom end of the second polishing surface 132. The bottom end 131b of the first polishing surface 131 may be in contact with the top end of the third polishing surface 133, and the top end 132t of the second polishing surface 132 may be in contact with the bottom end of the third polishing surface 133. For example, the end 110e of the first surface 110 may be substantially the same as the top end of the first polishing surface 131, the end 120e of the second surface 120 may be substantially the same as the bottom end of the second polishing surface 132, the bottom end 131b of the first polishing surface 131 may be substantially the same as the top end of the third polishing surface 133, and the top end 132t of the second polishing surface 132 may be substantially the same as the bottom end of the third polishing surface 133. Accordingly, for convenience of explanation, the end 110e of the first surface 110 and the top end of the first polishing surface 131 may be denoted by the same reference numeral 110e, the end 120e of the second surface 120 and the bottom end of the second polishing surface 132 may be denoted by the same reference numeral 120e, the bottom end 131b of the first polishing surface 131 and the top end of the third polishing surface 133 may be denoted by the same reference numeral 131b, and the top end 132t of the second polishing surface 132 and the bottom end of the third polishing surface 133 may be denoted by the same reference numeral 132t.

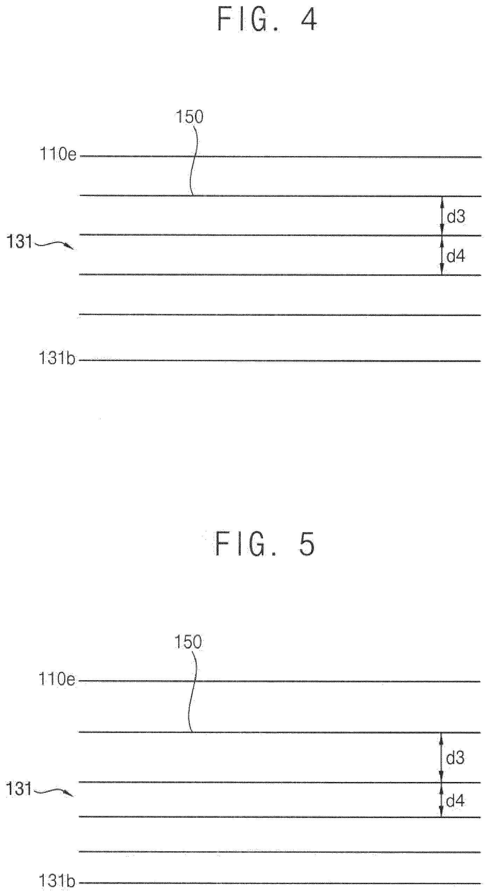

In an exemplary embodiment, polishing patterns extending substantially in parallel with the first surface 110 may be formed on the first polishing surface 131 and the second polishing surface 132. According to another exemplary embodiment, polishing patterns extending substantially in parallel with the first surface 110 may also be formed on the third polishing surface 133. The polishing patterns may be formed by a polishing process to be described below. The polishing patterns will be described in detail below with reference to FIGS. 4 and 5.

A center plane CF1 may be defined between the first surface 110 and the second surface 120 of the cover window 100. The center plane CF1 may be substantially in parallel with the first surface 110 and the second surface 120, and may pass through the center of the cover window 100. The first polishing surface 131 and the second polishing surface 132 may be asymmetrical with respect to the center plane CF1.

A first width of the first polishing surface 131 and a second width of the second polishing surface 132 may be different from each other. For example, the first width of the first polishing surface 131 may be substantially greater than the second width of the second polishing surface 132. Here, the first width of the first polishing surface 131 may be the distance in the first direction between the top end 110e and the bottom end 131b of the first polishing surface 131 which are in parallel with each other, and the second width of the second polishing surface 132 may be the distance in the second direction between the top end 132t and the bottom end 120e of the second polishing surface 132 which are in parallel with each other. For example, a ratio of the first width of the first polishing surface 131 to the second width of the second polishing surface 132 may be about 1.5:1 to about 3:1.

A first distance d1, which is the horizontal distance from the end 110e of the first surface 110 to a plane extended from the third polishing surface 133, may be about 150 micrometers (um) or more. A second distance d2, which is the horizontal distance from the end 120e of the second surface 120 to a plane extended from the third polishing surface 133, may be about 50 um or more. The second distance d2 may be less than the first distance d1.

The first inclination angle θ1, which is an angle between the first surface 110 and the first polishing surface 131, may be substantially the same as the second inclination angle θ2, which is an angle between the second surface 120 and the second polishing surface 132. Since the third polishing surface 133 is substantially perpendicular to the first surface 110 and the second surface 120, an included angle between the first polishing surface 131 and the third polishing surface 133 may be substantially the same as an included angle between the second polishing surface 132 and the third polishing surface 133. Accordingly, the end 110e of the first surface 110 may be positioned relatively more inside (further horizontally from the third polishing surface 133) than the end 120e of the second surface 120.

The first inclination angle θ1 and the second inclination angle θ2 may each be about 120° to about 140°. For example, the first inclination angle θ1 and the second inclination angle θ2 may each be about 135°. In this case, the first inclination angle θ1 may be substantially the same as the included angle between the first polishing surface 131 and the third polishing surface 133, and the second inclination angle θ2 and may be substantially the same as the included angle between the second polishing surface 132 and the third polishing surface 133.

FIGS. 4 and 5 are conceptual diagrams illustrating one configuration of a cover window according to an exemplary embodiment. For example, FIGS. 4 and 5 may illustrate polishing patterns 150 formed on the first polishing surface 131.

Referring to FIGS. 1, 2, 4, and 5, the plurality of polishing patterns 150 extending substantially in parallel with the first surface 110 may be formed on the first polishing surface 131 and the second polishing surface 132. Although FIG. 4 illustrates only the first polishing surface 131, polishing patterns 150 that are substantially the same as the polishing patterns 150 formed on the first polishing surface 131 may be also formed on the second polishing surface 132, so that the polishing patterns 150 formed on the first polishing surface 131 will be mainly described below.

Cracks may occur in the outer portion including the surface of the cover window 100 during the course of various processes for manufacturing the cover window 100. For example, in the process of cutting a cover window mother substrate into a plurality of cover windows 100, fine cracks may occur in the cover window 100. Once the cracks occur, such cracks may grow inward into the cover window 100, and may damage the inside of the cover window 100. In order to prevent this, a polishing process may be necessary. A polishing pattern may be formed on the polished surface in the process of the polishing process.

In one embodiment, the polishing pattern 150 may mean a unit of a pattern or a grain formed on a plane with a certain rule. The first polishing surface 131 and the second polishing surface 132 on which the polishing patterns 150 are formed may be irregular surfaces having fine recesses and protrusions. These may be provided by the polishing process as described above.

The polishing pattern 150 may include at least one of a protruded shape and a recessed shape. In other words, the polishing pattern 150 may be formed with a relatively depressed indentation compared to the periphery, or may be formed with an embossment protruding relatively more than the periphery.

The polishing patterns 150 may extend substantially in parallel with the top end 110e and the bottom end 131b of the first polishing surface 131. This means, that grooves and/or ridges in the polishing surface which define the polishing patterns extend substantially in parallel with the top end 110e and the bottom end 131b of the first polishing surface 131. Such polishing patterns 150 may be formed by polishing the first polishing surface 131 substantially in parallel with the first surface 110. When the polishing patterns 150 extend substantially in parallel with the first surface 110, the mechanical strength of the first polishing surface 131 may be improved. The improvement of the mechanical strength of the first polishing surface 131 and the polishing process will be described in detail below.

In an embodiment, the distances between adjacent polishing patterns 150 may be substantially the same. In other words, as illustrated in FIG. 4, distances d3 and d4 may be substantially the same.

In another embodiment, the distances between adjacent polishing patterns 150 may be different from each other. In other words, as illustrated in FIG. 5, distances d3 and d4 may be different from each other. This may be caused by a change in the moving speed of the polishing member in the polishing process to be described later.

FIGS. 4 and 5 illustrate that the polishing patterns 150 are formed on the entire surface of the first polishing surface 131. However, the embodiments are not limited thereto, and the polishing patterns 150 may be formed on a partial surface of the first polishing surface 131.

In an exemplary embodiment, a plurality of polishing patterns 150 extending substantially in parallel with the first surface 110 may also be formed on the third polishing surface 133. Since the polishing patterns 150 formed on the third polishing surface 133 are substantially the same as or similar to the polishing patterns 150 formed on the first polishing surface 131, a description thereof will be omitted.

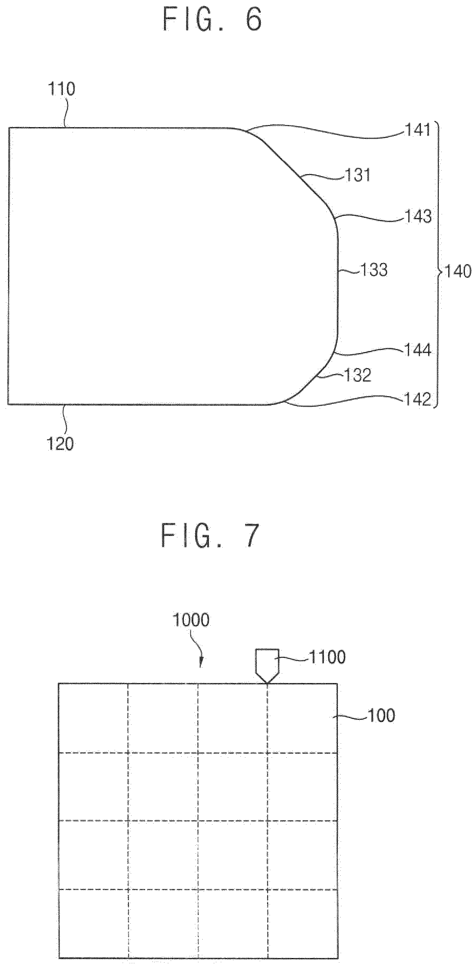

FIG. 6 is a cross-sectional view illustrating a cover window according to another exemplary embodiment.

Referring to FIGS. 1 to 6, a cover window 100 according to another exemplary embodiment may include a first surface 110, a second surface 120, a first polishing surface 131, a second polishing surface 132, and a third polishing surface 133. The second surface 120 may be opposite to the first surface 110. The first polishing surface 131 may extend from an end 110e of the first surface 110 along a first direction, and may have a first inclination angle. The second polishing surface 132 may extend from an end 120e of the second surface 120 along a second direction, and may have a second inclination angle. The third polishing surface 133 may extend from an end 131b of the first polishing surface 131 to an end 132t of the second polishing surface 132, and may be substantially perpendicular to the first surface 110. In the cover window 100 of FIG. 6 according to another exemplary embodiment, descriptions of structures and configurations substantially the same as or similar to the cover window 100 according to the exemplary embodiment described with reference to FIGS. 1 to 5 is omitted.

The cover window 100 of FIG. 6 according to another exemplary embodiment may include an additional polishing surface 140. The additional polishing surface 140 may be formed at at least one of: between the first surface 110 and the first polishing surface 131; between the first polishing surface 131 and the third polishing surface 133; between the third polishing surface 133 and the second polishing surface 132; and between the second polishing surface 132 and the second surface 120.

According to an embodiment, the additional polishing surface 140 may include first, second, third, and fourth additional polishing surfaces 141, 142, 143, and 144. The first additional polishing surface 141 may be formed between the first surface 110 and the first polishing surface 131. The second additional polishing surface 142 may be formed between the second surface 120 and the second polishing surface 132. The third additional polishing surface 143 may be formed between the first polishing surface 131 and the third polishing surface 133. The fourth additional polishing surface 144 may be formed between the second polishing surface 132 and the third polishing surface 133.

The additional polishing surface 140 may be substantially rounded. For example, the additional polishing surface 140 may have a convex curved surface facing the inside of the cover window 100. Therefore, even if the cover window 100 receives an impact from the outside, it is possible to alleviate the concentration of impact between the first surface 110 and the first polishing surface 131, between the first polishing surface 131 and the third polishing surface 133, between the third polishing surface 133 and the second polishing surface 132, and between the second polishing surface 132 and the second surface 120.

Hereinafter, a method for manufacturing a cover window according to an exemplary embodiment will be described with reference to FIGS. 7 to 9.

In order to manufacture a cover window according to an exemplary embodiment, a cover window including a first surface, a second surface opposite the first surface, and a side surface that is located between the first surface and the second surface and substantially perpendicular to the first surface may be prepared, and the side surface of the cover window may be processed. In order to process the side surface of the cover window, a first polishing surface extending along a first direction from the end of the first surface, and having a first inclination angle may be formed by horizontally polishing a portion between the first surface and the side surface. Further, a second polishing surface extending along a second direction from the end of the second surface, and having a second inclination angle may be formed by horizontally polishing a portion between the second surface and the side surface. Further, a third polishing surface extending substantially perpendicular to the first surface may be formed by horizontally polishing the side surface.

FIG. 7 is a view illustrating a method of manufacturing a cover window according to an exemplary embodiment. For example, FIG. 7 illustrates a cutting process of the cover window.

Referring to FIG. 7, a cutting process of a cover window mother substrate 1000 to obtain a plurality of cover windows 100 may be performed. The cover window mother substrate 1000 may be cut using the cutting member 1100. For example, the cutting member 1100 may include a wheel, a laser, or a water-jet.

After forming scribed lines on the first surface of the cover window mother substrate 1000 using the cutting member 1100, the cover window mother substrate 1000 may be cut along the scribed lines, so that the cover window mother substrate 1000 may be divided into a plurality of cover windows 100. Here, the cover window 100 may be cut so as to have a substantially larger area than the final cover window 100 in consideration of a subsequent polishing process.

In an exemplary embodiment, a strengthening process may be performed to strengthen the cover window motherboard substrate 1000 by ion exchange prior to the cutting process of the cover window motherboard substrate 1000. The strengthening process may be accomplished by dipping the cover window mother substrate 1000 in a $KNO_3$ solution and then heating it at a temperature of about 400 °C to about 450 °C for about 15 to about 18 hours. By replacing sodium (Na) components present on the surface of the cover window mother substrate 1000 with potassium (K) components by such strengthening treatment, the mechanical strength of the surface of the cover window mother substrate 1000 may be improved. For example, after the strengthening process is performed, a strengthened layer in which ions are substituted may be formed on the surface of the cover window mother substrate 1000. However, this is one embodiment for strengthening the cover window mother substrate 1000, and the strengthening process is not limited to the above-described method.

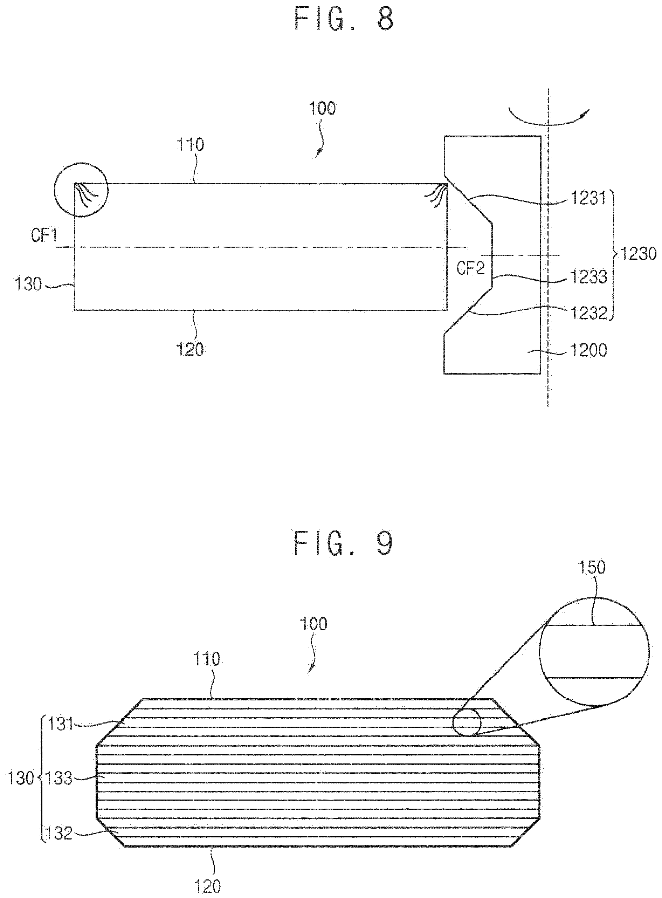

FIG. 8 is a cross-sectional view illustrating a method of manufacturing a cover window 100 according to an exemplary embodiment. FIG. 9 is a side view illustrating a method of manufacturing the cover window 100 according to an exemplary embodiment. For example, FIG. 8 illustrates the polishing process of the cover window 100, and FIG. 9 illustrates the cover window 100 polished by the polishing process.

As described above, the strengthening process may be performed before the cutting process according to the embodiment. However, even if the cover window mother substrate 1000 is subjected to the strengthening process, the side surface of the cover window 100 exposed by the cutting process may be not ion-exchanged at all, so that strength of the side surface may be relatively weaker than that of the first surface 110 and the second surface 120 strengthened by ion exchange. In addition, as shown in FIG. 8, a crack or the like may be formed on the top corner of the cover window 100 by the force applied by the cutting member 1100. Furthermore, the stress due to the impact may be concentrated on the top corner and the bottom corner of the cover window 100, so that the top corner and the bottom corner of the cover window 100 may be relatively easily broken.

Referring to FIGS. 8 and 9, a polishing process for forming the first polishing surface 131, the second polishing surface 132, and the third polishing surface 133 may be performed by processing the side surface 130 of the cover window 100. The polishing patterns 150 may be formed on the first polishing surface 131, the second polishing surface 132, and the third polishing surface 133 during the polishing process. The upper end of the side surface 130 of the cover window 100 may be horizontally polished to form the first polishing surface 131 extending along the first direction from the end of the first surface 110. Further, the lower end of the side surface 130 of the cover window 100 may be horizontally polished to form the second polishing surface 132 extending along the second direction from the end of the second surface 120. Further, the side surface 130 of the cover window 100 may be horizontally polished to form the third polishing surface 133 substantially perpendicular to the first surface 110. Accordingly, the polishing patterns 150 on the first polishing surface 131, the second polishing surface 132, and the third polishing surface 133 may be horizontally extended.

In the polishing process, the polishing member 1200 may be used to form the first to third polishing surfaces 131, 132, and 133. For example, the polishing member 1200 may include a polishing wheel.

The polishing member 1200 may include a processing surface 1230 for polishing the side surface 130 of the cover window 100. The processing surface 1230 may include a first processing surface 1231, a second processing surface 1232, and a third processing surface 1233. The first processing surface 1231 and the second processing surface 1232 are extended so as to be inclined to the inner portion of the polishing member 1200, and the third processing surface 1233 may extend so as to be substantially perpendicular to the bottom surface of the polishing member 1200. The first to third processing surfaces 1231, 1232, and 1233 may have shapes corresponding to the first to third polishing surfaces 131, 132, and 133 of the cover window 100 illustrated in FIG. 9, respectively.

The polishing member 1200 may polish the side surface 130 of the cover window 100 while moving substantially in parallel with the first surface 110 of the cover window 100 along the side surface 130 of the cover window 100. For example, the side surface 130 of the cover window 100 may be totally polished while rotating the polishing member 1200 about the vertical axis while moving the polishing member 1200 substantially in parallel with the first surface 110. Accordingly, the polishing patterns 150 extending substantially in parallel with the first surface 110 (for example, horizontally) may be formed on the side surface 130 of the cover window 100.

The polishing patterns 150 may include at least one of a protruded shape and a recessed shape. The processing surface 1230 may have at least one of a recessed portion and a protruded portion. For example, the recessed portion of the processing surface 1230 may form the protruded shape on the first to third polishing surfaces 131, 132, and 133 during the polishing process. Further, the protruded portion of the processing surface 1230 may form the recessed shape on the first to third polishing surfaces 131, 132, and 133 during the polishing process.

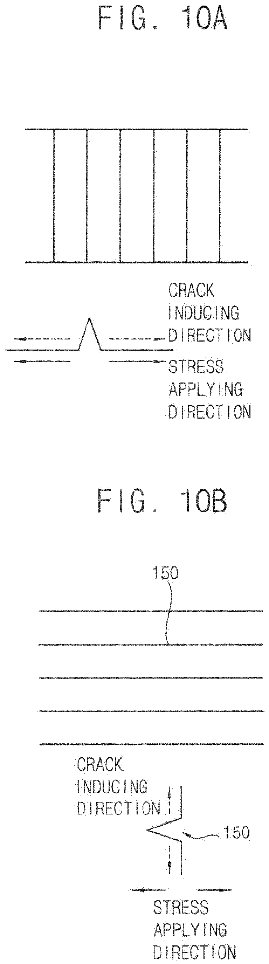

FIGS. 10A and 10B are diagrams for explaining the shape of the polishing pattern according to the horizontal polishing. For example, FIG. 10A illustrates a conventional polishing pattern according to vertical polishing, and FIG. 10B illustrates a polishing pattern according to a horizontal polishing according to an exemplary embodiment.

Referring to FIG. 10A, a vertical polishing may be performed on a conventional cover window. For example, the side surface of the cover window may be polished while rotating the polishing member about the horizontal axis. Accordingly, a polishing pattern extending in the vertical direction may be formed on the polished surface of the conventional cover window. In this case, as illustrated in FIG. 10A, the stress applying direction, which is the direction in which the stress applies on the surface of the polished surface, and the crack inducing direction, which is the direction in which the crack due to the polishing pattern is induced, may be substantially in parallel with each other, so that cracks may be grown on the inside of the cover window by the stress applying by the deflection of the cover window.

Referring to FIG. 10B, a horizontal polishing may be performed on the cover window 100 according to an exemplary embodiment, as described above. Accordingly, polishing patterns 150 extending in the horizontal direction may be formed on the first to third polishing surfaces 131, 132, and 133 of the cover window 100. In this case, as illustrated in FIG. 10B, the stress applying direction and the crack inducing direction may be substantially perpendicular to each other, so that even if a stress applies on the cover window 100, the crack may not grow on the inner side of the cover window 100.

Referring to FIGS. 8 and 9 again, the first processing surface 1231 and the second processing surface 1232 may extend from the third processing surface 1233 to substantially the same inclination angle to the upper and lower portions, respectively. Accordingly, as illustrated in FIGS. 3, 8, and 9, the cover window 100 having the first inclination angle $\theta 1$, which is an angle between the first surface 110 and the first polishing surface 131, and the second inclination angle $\theta 2$, which is an angle between the second surface 120 and the second polishing surface 132, may be formed.

The cover window 100 may be processed by locating the cover window 100 relatively above the polishing member 1200. Specifically, the center plane CF1 of the cover window 100, which is substantially parallel to the second surface 120 and passes through the center of the cover window 100, may be positioned above the center plane CF2 of the polishing member 1200, which is substantially parallel to the bottom surface of the polishing member 1200 and passes through the center of the polishing member 1200, in order to polish the side surface 130 of the cover window 100. Accordingly, as illustrated in FIG. 3, the cover window 100 having the first width of the first polishing surface 131 substantially greater than the second width of the second polishing surface 132 may be formed.

The first width of the first polishing surface 131 and the second width of the second polishing surface 132 may be adjusted by adjusting the relative height of the cover window 100 with respect to the processing surface 1230 of the polishing member 1200. As the cover window 100 is positioned relatively higher than the polishing member 1200, in other words, the center plane CF1 is located higher than center plane CF2, the difference between the first width of the first polishing surface 131 and the second width of the second polishing surface 132 may be increased. For example, the height of the cover window 100 relative to the polishing member 1200 may be adjusted, so that the top end of the side surface 130 of the cover window 100 may be polished by about 150 um or more substantially in parallel with the first surface 110, and the bottom end of the side surface 130 of the cover window 100 may be polished by about 50 um or more substantially in parallel with the second surface 120. In the exemplary embodiment, the ratio of the width of the first polishing surface 131 to the width of the second polishing surface 132 may be about 1.5:1 to about 3:1.

In the polishing process of the cover window according to the comparative examples, a symmetrical polishing process may be performed in which the polishing lengths of the upper end and the lower end of the side surface of the cover window are substantially the same. Comparison between the symmetrical polishing process according to the comparative examples and the asymmetrical polishing process according to the exemplary embodiments is as shown in Table 1 below.

[Table 1]

| experiment Condition | comparative examples (symmetrical polishing) | | | | exemplary embodiments (asymmetrical polishing) | | | |
|---|---|---|---|---|---|---|---|---|
| | upper end polishing (um) | lower end polishing (um) | strength (Mpa) | | upper end polishing (um) | lower end polishing (um) | strength (Mpa) | |
| | d1 | d2 | minimum | average | d1 | d2 | minimum | average |
| condition1 | 170 | 170 | 110 | 141 | 240 | 90 | 144 | 160 |
| condition2 | 160 | 140 | 146 | 161 | 180 | 120 | 157 | 184 |
| condition3 | 170 | 150 | 130 | 154 | 190 | 110 | 170 | 203 |

As shown in Table 1, when the bending strength of the cover window is measured with only the polishing lengths of the upper end and the lower end of the side surface of the cover window being different under the same conditions, the strength of the cover window with the asymmetric polishing is greater than the strength of the cover window with the symmetrical polishing. When the scribed line is formed on the top surface of the cover window mother substrate, and the cover window mother substrate is cut along the scribed line to acquire the cover window, cracks may concentrate on the top corner of the side surface of the cover window. Therefore, when the side surface of the cover window is asymmetrically polished and the polishing length of the upper end is substantially larger than the polishing length of the lower end, the top corner of the side surface of the cover window in which the cracks are intensively formed is polished, so that the cracks may be reduced. Consequently, the asymmetrically polished cover window may have improved mechanical strength compared to a symmetrically polished cover window as the cracks weakening the strength of the cover window are reduced.

In an exemplary embodiment, the first to third polishing surfaces 131, 132, and 133 may be formed simultaneously using all of the first through third processing surfaces 1231, 1232, and 1233 of the polishing member 1200. In another exemplary embodiment, the first and second polishing surfaces 131 and 132 may be formed simultaneously using the first and second processing surfaces 1231 and 1232 of the polishing member 1200. In this case, the third polishing surface 133 may also be formed by polishing the unpolished side surface 130 using a polishing means different from the polishing member 1200.

The polishing process of the cover window described above may be performed by a computer numerical control (CNC) process. In this case, a precise polishing process may be carried out according to required specifications.

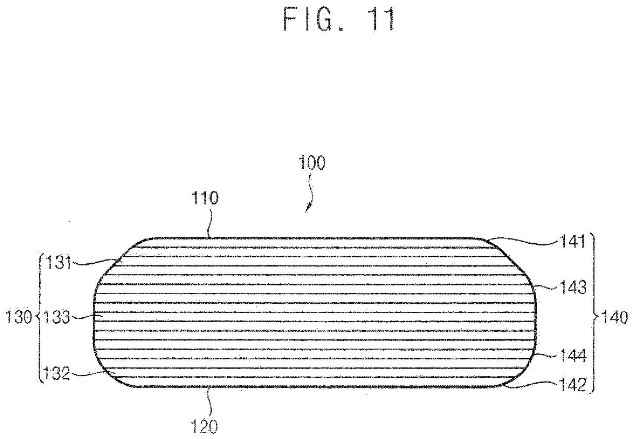

FIG. 11 is a side view illustrating a method for manufacturing a cover window according to another exemplary embodiment.

Referring to FIG. 11, in another exemplary embodiment, after the first to third polishing surfaces 131, 132, and 133 are formed by the polishing process, an additional polishing process of forming an additional polishing surface 140 at at least one of: between the first surface 110 and the first polishing surface 131; between the first polishing surface 131 and the third polishing surface 133; between the third polishing surface 133 and the second polishing surface 132; and between the second polishing surface 132 and the second surface 120, may be performed. A polishing member, e.g., a grinder, a sandpaper, may be used to round off at least one corner of: between the first surface 110 and the first polishing surface 131; between the first polishing surface 131 and the third polishing surface 133; between the third polishing surface 133 and the second polishing surface 132; and between the second polishing surface 132 and the second surface 120, in the additional polishing process.

According to the embodiments, the first additional polishing surface 141 may be formed between the first surface 110 and the first polishing surface 131, the second additional polishing surface 142 may be formed between the second surface 120 and the second polishing surface 132, the third additional polishing surface 143 may be formed between the first polishing surface 131 and the third polishing surface 133, and the fourth additional polishing surface 144 may be formed between the second polishing surface 132 and the third polishing surface 133.

The additional polishing surface 140 may be formed to be substantially rounded. For example, the additional polishing surface 140 may be formed to have a convex curved surface facing the inside of the cover window 100. Accordingly, even if the cover window 100 receives an impact from the outside, it is possible to alleviate the concentration of impact between the first surface 110 and the first polishing surface 131, between the first polishing surface 131 and the third polishing surface 133, between the third polishing surface 133 and the second polishing surface 132, and between the second polishing surface 132 and the second surface 120.

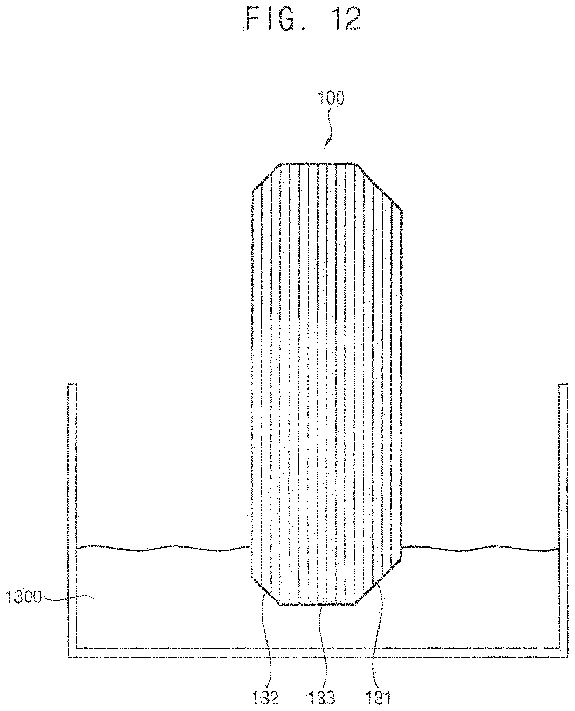

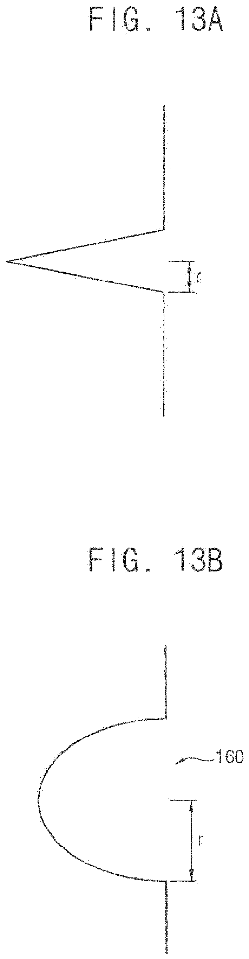

FIG. 12 is a view illustrating a method of manufacturing a cover window 100 according to still another exemplary embodiment. FIGS. 13A and 13B are cross-sectional views illustrating one configuration of a cover window 100 formed according to still another exemplary embodiment. For example, FIG. 12 illustrates the healing process of the cover window, FIG. 13A illustrates cracks formed in the polishing surface after the polishing process, and FIG. 13B illustrates a blunt formed by the healing process.

Referring to FIGS. 12, 13A, and 13B, in still another exemplary embodiment, after the first to third polishing surfaces 131, 132, and 133 are formed by the polishing process, or after the additional polishing surface 140 is formed by the additional polishing process, a healing process of immersing the cover window 100 in the glass etching/healing composition may be performed.

As illustrated in FIG. 13A, irregularly shaped cracks or defects may exist on the first to third polishing surfaces 131, 132, and 133 which have undergone the polishing process and/or the additional polishing surface 140 which has undergone the additional polishing process. Additionally, sub-surface damage (SSD) may occur below the surface of the first to third polishing surfaces 131, 132, and 133 that have undergone the polishing process and/or the additional polishing surface 140 that has undergone additional polishing process. Hereinafter, for convenience of description, such cracks, defects, and SSD are all referred to as cracks. Such cracks may lower the mechanical strength of the cover window 100.

The cover window 100 may be immersed so that the first to third polishing surfaces 131, 132, and 133 are immersed in the container containing the glass etching/healing composition 1300 so as to heal the first to third polishing surfaces 131, 132, and 133. For example, the cover window 100 may be immersed in the glass etching/healing composition 1300 for about several minutes. The glass etching/healing composition 1300 may include, for example, hydrogen fluoride (HF) or sodium hydroxide.

By the healing process, the glass surrounding the crack may be melted and etched, and a semicircular blunt 160 may be formed as illustrated in FIG. 13B. The relationship between the length (r) of the crack and the stress (a) applied to the cover window 100 may be expressed by the following equation.

$$a = \frac{Kic}{Y\sqrt{\pi \times r}}$$

In the above equation, the a may represent a stress, the Kic may represent a stress concentration coefficient of the cover window 100, the Y may represent a crack tip shape coefficient of the crack, and the r may represent a length of the crack.

As illustrated in FIG. 13A, a crack having a pointed shape may be formed on the first to third polishing surfaces 131, 132, and 133 before the healing process. The crack may have a relatively small length, so that the r may be relatively small, thus stress (a) may be relatively large. However, as illustrated in FIG. 13B, in the case where the blunt 160 is formed by the healing process, the r may become large, thus the stress (a) may be reduced. Such reduction in stress may increase the mechanical strength of the cover window 100.

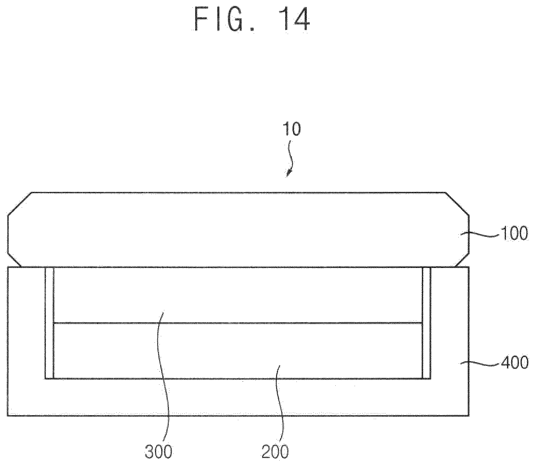

FIG. 14 is a cross-sectional view illustrating a display device 10 according to an exemplary embodiment.

Referring to FIG. 14, the display device 10 according to an exemplary embodiment may includes a display panel 200, a touch panel 300 disposed on the display panel 200, a cover window 100 disposed on the touch panel 300, and a set frame 400 surrounding a lower portion of the display panel 200. The cover window 100 included in the display device 10 is substantially the same as the cover window 100 described with reference to FIGS. 1 to 6, so that a detailed description thereof will be omitted.

The display panel 200 may display images. The display panel 200 is not particularly limited, and may include various display panels such as an organic light emitting display panel, a liquid crystal display panel, a plasma display panel, an electrophoretic display panel, or the like.

The touch panel 300 may be disposed between the display panel 200 and the cover window 100. The touch panel 300 may receive a touch signal transmitted from the outside of the display device 10. The touch panel 300 may convert the touch signal into an electrical signal, and may provide it to the display panel 200.

According to the embodiment, the touch panel 300 may include a capacitive touch panel. However, the touch panel 300 according to the exemplary embodiment is not limited thereto, and may include a resistive film type or electronic magnetic field type touch panel.

The cover window 100 may be disposed on the touch panel 300. The cover window 100 may be disposed on the entire surface of the display device 10, and may protect the display panel 200, the touch panel 300, and the like.

Although not illustrated in FIG. 14, a polarizing member may be disposed between the touch panel 300 and the cover window 100. The polarizing member may suppress external light reflection, and may improve the visibility of the image displayed on the display panel 200.

According to embodiments, the display panel 200 may have flexible characteristics. Since the display panel 200 has flexible characteristics, the cover window 100 may also be bent with a constant curvature when the display device 10 is bent. In this case, stress due to deflection may occur in the cover window 100, therefore, the force with which the cracks formed on the cover window 100 advance to the inner side of the cover window 100 may increase. However, the cover window 100 according to the exemplary embodiment may have the first polishing surface 131, the second polishing surface 132, and the third polishing surface 133 formed on the side surface 130, and may have the polishing pattern 150 extending in the horizontal direction, thereby preventing such cracks from forming or growing, and increasing the mechanical strength of the display device 10.

The cover window according to an exemplary embodiment can be applied to a display device included in a computer, a notebook, a mobile phone, a smartphone, a smart pad, a PMP, a PDA, an MP3 player, or the like.

Although the cover window according to the exemplary embodiment, the display device including the cover window, and the manufacturing method of the cover window have been described with reference to the drawings, the illustrated embodiment is an example and can be modified and changed by a person having ordinary knowledge in the relevant technical field without departing from the scope of the inventive concept described in the following claims.

## Claims

1. A cover window (100), comprising:

   a first surface (110);
   a second surface (120) opposite the first surface (110);
   a first polished surface (131) extending from an end (110e) of the first surface (110) along a first direction, the first polished surface (131) having a first inclination angle with respect to the first surface (110); and
   a second polished surface (132) extending from an end (120e) of the second surface (120) along a second direction, the second polished surface (132) having a second inclination angle with respect to the second surface (120),
   wherein the first polished surface (131) and the second polished surface (132) are asymmetric with respect to a center plane (CF1), the center plane (CF1) passing through a center of the cover window (100) and in parallel with the first surface (110)
   **characterized in that**
   the first inclination angle is the same as the second inclination angle.

2. A cover window (100), comprising:

   a first surface (110);
   a second surface (120) opposite the first surface (110);
   a first polished surface (131) extending from an end (110e) of the first surface (110) along a first direction, the first polished surface (131) having a first inclination angle with respect to the first surface (110); and
   a second polished surface (132) extending from an end (120e) of the second surface (120) along a second direction, the second polished surface (132) having a second inclination angle with respect to the second surface (120)
**characterized in that**each of the first polished surface (131) and the second polished surface (132) comprises a plurality of polished patterns (150), the plurality of polished patterns (150) extending in parallel with the first surface (110).

3. The cover window (100) of claim 1 or 2, wherein a first width of the first polished surface (131) along the first direction is different from a second width of the second polished surface (132) along the second direction.

4. The cover window (100) of claim 3, wherein a ratio of the first width to the second width is in a range between 1.5:1 and 3:1.

5. The cover window (100) of at least one of claims 1 to 4, further comprising a third polished surface (133) extending from an end (131b) of the first polished surface (131) to an end (132t) of the second polished surface (132), the third polished surface (133) being perpendicular to the first surface (110).

6. The cover window (100) of claim 5, further comprising an additional polished surface (140) disposed at at least one of: between the first surface (110) and the first polished surface (131); between the first polished surface (131) and the third polished surface (133); between the third polished surface (133) and the second polished surface (132); and between the second polished surface (132) and the second surface (120).

7. The cover window (100) of claim 6, wherein the additional polished surface (140) is rounded.

8. The cover window (100) of claim 2, further comprising a third polished surface (133) extending from an end (131b) of the first polished surface (131) to an end (132t) of the second polished surface (132), the third polished surface (133) being perpendicular to the first surface (110), wherein the third polished surface (133) comprises the plurality of polished patterns (150), the plurality of polished patterns (150) extending in parallel with the first surface (110).

9. The cover window (100) of claim 1, wherein each of the first polished surface (131) and the second polished surface (132) comprises a plurality of polished patterns (150), the plurality of polished patterns (150) extending in parallel with the first surface (110).

10. A display device, comprising:

   a display panel (200); and
   a cover window (100) according to one of claims 1 to 9 disposed on the display panel (200).

11. A method of manufacturing a cover window (100), comprising:

   cutting a cover window mother substrate (1000) to form a cover window (100) comprising a first surface (110), a second surface (120) opposite the first surface (110), and a side surface disposed between the first surface (110) and the second surface (120), the side surface being perpendicular to the first surface (110); and
   processing the side surface of the cover window (100) comprising:

      polishing a portion between the first surface (110) and the side surface to form a first polished surface (131), the first polished surface (131) extending from an end (110e) of the first surface (110) along a first direction, the first polished surface (131) having a first inclination angle with respect to the first surface (110); and
      polishing a portion between the second surface (120) and the side surface to form a second polished surface (132), the second polished surface (132) extending from an end (120e) of the second surface (120) along a second direction, the second polished surface (132) having a second inclination angle with respect to the second surface (120), and

   wherein the first polished surface (131) and the second polished surface (132) are asymmetric with respect to a center plane (CF1), the center plane (CF1) passing through a center of the cover window (100) and in parallel with the first surface (110)
   **characterized in that**
   the first inclination angle is the same as the second inclination angle.

**12.** A method of manufacturing a cover window (100), comprising:

cutting a cover window mother substrate (1000) to form a cover window (100) comprising a first surface (110), a second surface (120) opposite the first surface (110), and a side surface disposed between the first surface (110) and the second surface (120), the side surface being perpendicular to the first surface (110); and processing the side surface of the cover window (100) comprising:

polishing a portion between the first surface (110) and the side surface to form a first polished surface (131), the first polished surface (131) extending from an end (110e) of the first surface (110) along a first direction, the first polished surface (131) having a first inclination angle with respect to the first surface (110); and polishing a portion between the second surface (120) and the side surface to form a second polished surface (132), the second polished surface (132) extending from an end (120e) of the second surface (120) along a second direction, the second polished surface (132) having a second inclination angle with respect to the second surface (120)

**characterized in that** each of the first polished surface (131) and the second polished surface (132) comprises a plurality of polished patterns (150), the plurality of polished patterns (150) extending in parallel with the first surface (110).

**13.** The method of claim 11 or 12, wherein the processing the side surface of the cover window (100) further comprises polishing the side surface to form a third polished surface (133), the third polished surface (133) extending from an end (131b) of the first polished surface (131) to an end (132t) of the second polished surface (132), the third polished surface (133) being perpendicular to the first surface (110).

**14.** The method of claim 13, wherein the processing the side surface of the cover window (100) further comprises polishing the side surface to form an additional polished surface (140) disposed at at least one of: between the first surface (110) and the first polished surface (131); between the first polished surface (131) and the third polished surface (133); between the third polished surface (133) and the second polished surface (132); and between the second polished surface (132) and the second surface (120).

**15.** The method of claim 14, wherein the additional polished surface (140) is formed to be rounded.

**Patentansprüche**

**1.** Abdeckfenster (100), das Folgendes umfasst:

eine erste Fläche (110);
eine zweite Fläche (120) gegenüber der ersten Fläche (110);
eine erste polierte Fläche (131), die sich von einem Ende (110e) der ersten Fläche (110) entlang einer ersten Richtung erstreckt, wobei die erste polierte Fläche (131) einen ersten Neigungswinkel in Bezug auf die erste Fläche (110) aufweist; und
eine zweite polierte Fläche (132), die sich von einem Ende (120e) der zweiten Fläche (120) entlang einer zweiten Richtung erstreckt, wobei die zweite polierte Fläche (132) einen zweiten Neigungswinkel in Bezug auf die zweite Fläche (120) aufweist,
wobei die erste polierte Fläche (131) und die zweite polierte Fläche (132) asymmetrisch in Bezug auf eine mittlere Ebene (CF1) sind, wobei die mittlere Ebene (CF1) durch einen Mittelpunkt des Abdeckfensters (100) und parallel mit der ersten Fläche (110) verläuft,
**dadurch gekennzeichnet, dass**
der erste Neigungswinkel derselbe ist wie der zweite Neigungswinkel.

**2.** Abdeckfenster (100), das Folgendes umfasst:

eine erste Fläche (110);
eine zweite Fläche (120) gegenüber der ersten Fläche (110);
eine erste polierte Fläche (131), die sich von einem Ende (110e) der ersten Fläche (110) entlang einer ersten Richtung erstreckt, wobei die erste polierte Fläche (131) einen ersten Neigungswinkel in Bezug auf die erste Fläche (110) aufweist; und

eine zweite polierte Fläche (132), die sich von einem Ende (120e) der zweiten Fläche (120) entlang einer zweiten Richtung erstreckt, wobei die zweite polierte Fläche (132) einen zweiten Neigungswinkel in Bezug auf die zweite Fläche (120) aufweist,

**dadurch gekennzeichnet, dass** jede der ersten polierten Fläche (131) und der zweiten polierten Fläche (132) eine Vielzahl von polierten Mustern (150) aufweist, wobei sich die Vielzahl von polierten Mustern (150) parallel mit der ersten Fläche (110) erstreckt.

3. Abdeckfenster (100) nach Anspruch 1 oder 2, wobei sich eine erste Breite der ersten polierten Fläche (131) entlang der ersten Richtung von einer zweiten Breite der zweiten polierten Fläche (132) entlang der zweiten Richtung unterscheidet.

4. Abdeckfenster (100) nach Anspruch 3, wobei ein Verhältnis der ersten Breite zu der zweiten Breite in einem Bereich zwischen 1,5:1 und 3:1 liegt.

5. Abdeckfenster (100) nach mindestens einem der Ansprüche 1 bis 4, das ferner eine dritte polierte Fläche (133) umfasst, die sich von einem Ende (131b) der ersten polierten Fläche (131) zu einem Ende (132t) der zweiten polierten Fläche (132) erstreckt, wobei die dritte polierte Fläche (133) senkrecht zu der ersten Fläche (110) ist.

6. Abdeckfenster (100) nach Anspruch 5, das ferner eine zusätzliche polierte Fläche (140) umfasst, die an mindestens einer der folgenden Stellen angeordnet ist: zwischen der ersten Fläche (110) und der ersten polierten Fläche (131); zwischen der ersten polierten Fläche (131) und der dritten polierten Fläche (133); zwischen der dritten polierten Fläche (133) und der zweiten polierten Fläche (132); und zwischen der zweiten polierten Fläche (132) und der zweiten Fläche (120).

7. Abdeckfenster (100) nach Anspruch 6, wobei die zusätzliche polierte Fläche (140) abgerundet ist.

8. Abdeckfenster (100) nach Anspruch 2, das ferner eine dritte polierte Fläche (133) umfasst, die sich von einem Ende (131b) der ersten polierten Fläche (131) zu einem Ende (132t) der zweiten polierten Fläche (132) erstreckt, wobei die dritte polierte Fläche (133) senkrecht zu der ersten Fläche (110) ist, wobei die dritte polierte Fläche (133) die Vielzahl von polierten Mustern (150) umfasst, wobei sich die Vielzahl von polierten Mustern (150) parallel mit der ersten Fläche (110) erstreckt.

9. Abdeckfenster (100) nach Anspruch 1, wobei jede der ersten polierten Fläche (131) und der zweiten polierten Fläche (132) eine Vielzahl von polierten Mustern (150) umfasst, wobei sich die Vielzahl von polierten Mustern (150) parallel mit der ersten Fläche (110) erstreckt.

10. Anzeigevorrichtung, die Folgendes umfasst:

eine Anzeigeplatte (200); und
ein Abdeckfenster (100) nach einem der Ansprüche 1 bis 9, das an der Anzeigeplatte (200) angeordnet ist.

11. Verfahren zur Herstellung eines Abdeckfensters (100), das Folgendes umfasst:

Schneiden eines Abdeckfenster-Muttersubstrats (1000), um ein Abdeckfenster (100) zu bilden, das eine erste Fläche (110), eine zweite Fläche (120) gegenüber der ersten Fläche (110) und eine Seitenfläche umfasst, die zwischen der ersten Fläche (110) und der zweiten Fläche (120) angeordnet ist, wobei die Seitenfläche senkrecht zu der ersten Fläche (110) ist; und
Verarbeiten der Seitenfläche des Abdeckfensters (100), was Folgendes umfasst:

Polieren eines Abschnitts zwischen der ersten Fläche (110) und der Seitenfläche, um eine erste polierte Fläche (131) zu bilden, wobei sich die erste polierte Fläche (131) von einem Ende (110e) der ersten Fläche (110) entlang einer ersten Richtung erstreckt, wobei die erste polierte Fläche (131) einen ersten Neigungswinkel in Bezug auf die erste Fläche (110) aufweist; und
Polieren eines Abschnitts zwischen der zweiten Fläche (120) und der Seitenfläche, um eine zweite polierte Fläche (132) zu bilden, wobei sich die zweite polierte Fläche (132) von einem Ende (120e) der zweiten Fläche (120) entlang einer zweiten Richtung erstreckt, wobei die zweite polierte Fläche (132) einen zweiten Neigungswinkel in Bezug auf die zweite Fläche (120) aufweist, und wobei die erste polierte Fläche (131) und die zweite polierte Fläche (132) asymmetrisch in Bezug auf eine mittlere Ebene (CF1) sind, wobei die mittlere Ebene (CF1) durch einen Mittelpunkt des Abdeckfensters (100) und parallel mit der ersten Fläche (110) verläuft,

**dadurch gekennzeichnet, dass**

der erste Neigungswinkel derselbe ist wie der zweite Neigungswinkel.

12. Verfahren zum Herstellen eines Abdeckfensters (100), das Folgendes umfasst:

Schneiden eines Abdeckfenster-Muttersubstrats (1000), um ein Abdeckfenster (100) zu bilden, das eine erste Fläche (110), eine zweite Fläche (120) gegenüber der ersten Fläche (110) und eine Seitenfläche umfasst, die zwischen der ersten Fläche (110) und der zweiten Fläche (120) angeordnet ist, wobei die Seitenfläche senkrecht zu der ersten Fläche (110) ist; und
Verarbeiten der Seitenfläche des Abdeckfensters (100), das Folgendes umfasst:

Polieren eines Abschnitts zwischen der ersten Fläche (110) und der Seitenfläche, um eine erste polierte Fläche (131) zu bilden, wobei sich die erste polierte Fläche (131) von einem Ende (110e) der ersten Fläche (110) entlang einer ersten Richtung erstreckt, wobei die erste polierte Fläche (131) einen ersten Neigungswinkel in Bezug auf die erste Fläche (110) aufweist; und
Polieren eines Abschnitts zwischen der zweiten Fläche (120) und der Seitenfläche, um eine zweite polierte Fläche (132) zu bilden, wobei sich die zweite polierte Fläche (132) von einem Ende (120e) der zweiten Fläche (120) entlang einer zweiten Richtung erstreckt, wobei die zweite polierte Fläche (132) einen zweiten Neigungswinkel in Bezug auf die zweite Fläche (120) aufweist, **dadurch gekennzeichnet, dass** jede der ersten polierten Fläche (131) und der zweiten polierten Fläche (132) eine Vielzahl von polierten Mustern (150) umfasst, wobei sich die Vielzahl von polierten Mustern (150) parallel mit der ersten Fläche (110) erstreckt.

13. Verfahren nach Anspruch 11 oder 12, wobei das Verarbeiten der Seitenfläche des Abdeckfensters (100) ferner Polieren der Seitenfläche umfasst, um eine dritte polierte Fläche (133) zu bilden, wobei sich die dritte polierte Fläche (133) von einem Ende (131b) der ersten polierten Fläche (131) zu einem Ende (132t) der zweiten polierten Fläche (132) erstreckt, wobei die dritte polierte Fläche (133) senkrecht zu der ersten Fläche (110) ist.

14. Verfahren nach Anspruch 13, wobei das Verarbeiten der Seitenfläche des Abdeckfensters (100) ferner Polieren der Seitenfläche umfasst, um eine zusätzliche polierte Fläche (140) zu bilden, die an mindestens einer der folgenden Stellen angeordnet ist: zwischen der ersten Fläche (110) und der ersten polierten Fläche (131); zwischen der ersten polierten Fläche (131) und der dritten polierten Fläche (133); zwischen der dritten polierten Fläche (133) und der zweiten polierten Fläche (132); und zwischen der zweiten polierten Fläche (132) und der zweiten Fläche (120).

15. Verfahren nach Anspruch 14, wobei die zusätzliche polierte Fläche (140) dazu gebildet ist, abgerundet zu sein.

**Revendications**

1. Vitrage (100), comprenant :

une première surface (110) ;
une seconde surface (120) opposée à la première surface (110) ;
une première surface polie (131) s'étendant depuis une extrémité (110e) de la première surface (110) suivant une première direction, la première surface polie (131) ayant un premier angle d'inclinaison par rapport à la première surface (110) ; et
une deuxième surface polie (132) s'étendant depuis une extrémité (120e) de la seconde surface (120) suivant une seconde direction, la deuxième surface polie (132) ayant un second angle d'inclinaison par rapport à la seconde surface (120),
dans lequel la première surface polie (131) et la deuxième surface polie (132) sont asymétriques par rapport à un plan central (CF1), le plan central (CF1) passant à travers un centre du vitrage (100) et en parallèle à la première surface (110),
**caractérisé en ce que**
le premier angle d'inclinaison est le même que le second angle d'inclinaison.

2. Vitrage (100), comprenant :

une première surface (110) ;
une seconde surface (120) opposée à la première surface (110) ;
une première surface polie (131) s'étendant depuis une extrémité (110e) de la première surface (110) suivant une première direction, la première surface polie (131) ayant un premier angle d'inclinaison par rapport à la première surface (110) ; et
une deuxième surface polie (132) s'étendant depuis une extrémité (120e) de la seconde surface (120) suivant une seconde direction, la deuxième surface polie (132) ayant un second angle d'inclinaison par rapport à la seconde surface (120),
**caractérisé en ce que** chacune de la première surface polie (131) et de la deuxième surface polie (132) comprend une pluralité de motifs polis (150), la pluralité de motifs polis (150) s'étendant en parallèle à la première surface (110).

3. Vitrage (100) selon la revendication 1 ou 2, dans lequel une première largeur de la première surface polie (131) suivant la première direction est différente d'une seconde largeur de la deuxième surface polie (132) suivant la seconde direction.

4. Vitrage (100) selon la revendication 3, dans lequel un rapport entre la première largeur et la seconde largeur est dans une plage entre 1,5 : 1 et 3 : 1.

5. Vitrage (100) selon au moins l'une des revendications 1 à 4, comprenant en outre une troisième surface polie (133) s'étendant depuis une extrémité (131b) de la première surface polie (131) jusqu'à une extrémité (132t) de la deuxième surface polie (132), la troisième surface polie (133) étant perpendiculaire à la première surface (110).

6. Vitrage (100) selon la revendication 5, comprenant en outre une surface polie supplémentaire (140) disposée au moins : entre la première surface (110) et la première surface polie (131) ; entre la première surface polie (131) et la troisième surface polie (133) ; entre la troisième surface polie (133) et la deuxième surface polie (132) ; et entre la deuxième surface polie (132) et la seconde surface (120).

7. Vitrage (100) selon la revendication 6, dans lequel la surface polie supplémentaire (140) est arrondie.

8. Vitrage (100) selon la revendication 2, comprenant en outre une troisième surface polie (133) s'étendant depuis une extrémité (131b) de la première surface polie (131) jusqu'à une extrémité (132t) de la deuxième surface polie (132), la troisième surface polie (133) étant perpendiculaire à la première surface (110),
dans lequel la troisième surface polie (133) comprend la pluralité de motifs polis (150), la pluralité de motifs polis (150) s'étendant en parallèle à la première surface (110).

9. Vitrage (100) selon la revendication 1, dans lequel chacune de la première surface polie (131) et de la deuxième surface polie (132) comprend une pluralité de motifs polis (150), la pluralité de motifs polis (150) s'étendant en parallèle à la première surface (110).

10. Dispositif d'affichage, comprenant :

un panneau d'affichage (200) ; et
un vitrage (100) selon l'une des revendications 1 à 9 disposé sur le panneau d'affichage (200).

11. Procédé de fabrication d'un vitrage (100), comprenant :

la découpe d'un substrat mère de vitrage (1000) pour former un vitrage (100) comprenant une première surface (110), une seconde surface (120) opposée à la première surface (110), et une surface de côté disposée entre la première surface (110) et la seconde surface (120), la surface de côté étant perpendiculaire à la première surface (110) ; et
le traitement de la surface de côté du vitrage (100) comprenant :

le polissage d'une portion entre la première surface (110) et la surface de côté pour former une première surface polie (131), la première surface polie (131) s'étendant depuis une extrémité (110e) de la première surface (110) suivant une première direction, la première surface polie (131) ayant un premier angle d'inclinaison par rapport à la première surface (110) ; et
le polissage d'une portion entre la seconde surface (120) et la surface de côté pour former une deuxième surface polie (132), la deuxième surface polie (132) s'étendant depuis une extrémité (120e) de la seconde surface (120) suivant une seconde direction, la deuxième surface polie (132) ayant un second angle d'inclinaison par rapport à la seconde surface (120), et

dans lequel la première surface polie (131) et la deuxième surface polie (132) sont asymétriques par rapport à un plan central (CF1), le plan central (CF1) passant à travers un centre du vitrage (100) et en parallèle à la première surface (110)

**caractérisé en ce que**

le premier angle d'inclinaison est le même que le second angle d'inclinaison.

**12.** Procédé de fabrication d'un vitrage (100), comprenant :

la découpe d'un substrat mère de vitrage (1000) pour former un vitrage (100) comprenant une première surface (110), une seconde surface (120) opposée à la première surface (110), et une surface de côté disposée entre la première surface (110) et la seconde surface (120), la surface de côté étant perpendiculaire à la première surface (110) ; et

le traitement de la surface de côté du vitrage (100) comprenant :

le polissage d'une portion entre la première surface (110) et la surface de côté pour former une première surface polie (131), la première surface polie (131) s'étendant depuis une extrémité (110e) de la première surface (110) suivant une première direction, la première surface polie (131) ayant un premier angle d'inclinaison par rapport à la première surface (110) ; et

le polissage d'une portion entre la seconde surface (120) et la surface de côté pour former une deuxième surface polie (132), la deuxième surface polie (132) s'étendant depuis une extrémité (120e) de la seconde surface (120) suivant une seconde direction, la deuxième surface polie (132) ayant un second angle d'inclinaison par rapport à la seconde surface (120)

**caractérisé en ce que** chacune de la première surface polie (131) et de la deuxième surface polie (132) comprend une pluralité de motifs polis (150), la pluralité de motifs polis (150) s'étendant en parallèle à la première surface (110).

**13.** Procédé selon la revendication 11 ou 12, dans lequel le traitement de la surface de côté du vitrage (100) comprend en outre le polissage de la surface de côté pour former une troisième surface polie (133), la troisième surface polie (133) s'étendant depuis une extrémité (131b) de la première surface polie (131) jusqu'à une extrémité (132t) de la deuxième surface polie (132), la troisième surface polie (133) étant perpendiculaire à la première surface (110).

**14.** Procédé selon la revendication 13, dans lequel le traitement de la surface de côté du vitrage (100) comprend en outre le polissage de la surface de côté pour former une surface polie supplémentaire (140) disposée au moins : entre la première surface (110) et la première surface polie (131) ; entre la première surface polie (131) et la troisième surface polie (133) ; entre la troisième surface polie (133) et la deuxième surface polie (132) ; et entre la deuxième surface polie (132) et la seconde surface (120).

**15.** Procédé selon la revendication 14, dans lequel la surface polie supplémentaire (140) est formée pour être arrondie.

FIG. 1

FIG. 2

FIG. 3

# FIG. 4

# FIG. 5

# FIG. 6

# FIG. 7

# FIG. 8

# FIG. 9

# FIG. 10A

CRACK
INDUCING
DIRECTION

STRESS
APPLYING
DIRECTION

# FIG. 10B

150

CRACK
INDUCING
DIRECTION

150

STRESS
APPLYING
DIRECTION

FIG. 11

FIG. 12

# FIG. 13A

# FIG. 13B

FIG. 14

**EP 3 290 998 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20090225258 A1
- US 20140170387 A1